# EUROPEAN PATENT APPLICATION

(11) **EP 3 109 553 A1**
(43) Date of publication of application: **28.12.2016**
(21) Application number: 16176350.3
(22) Date of filing: 27.06.2016
(51) Int. Cl.: F23R 3/14, F23R 3/28, F23D 11/22, F23D 11/36

(54) **FUEL INJECTOR SYSTEMS**

(30) Priority: 25.06.2015 US 201514750585
(71) Applicant: Delavan, Inc., West Des Moines, IA 50265 (US)
(72) Inventor: SHORT, John E., West Des Moines, IA Iowa 50265 (US); PACK, Spencer D., West Des Moines, IA Iowa 50265 (US); ZINK, Gregory, West Des Moines, IA Iowa 50265 (US); RYON, Jason A., Carlisle, IA Iowa 50047 (US); KHAIRALLAH, Fouad T., West Des Moines, IA Iowa 50265 (US)
(74) Representative: Iceton, Greg James

(57) **Abstract**

In accordance with at least one aspect of this disclosure, a fuel injector system (100) can include an air mixer (400) defining an outer air circuit (401), at least one intermediate air circuit (403), and an inner air circuit (405). The fuel injector system (100) can also include a fuel manifold (200) defining a fuel circuit (201), at least a portion of which is operatively disposed within the air mixer (400) such that the fuel circuit (201) and the intermediate air circuit (403) are in fluid communication with each other for atomization of fuel. At least one of the air mixer (400) or the fuel manifold (200) can be additively manufactured.

## Description

### BACKGROUND

### 1. Field

The present disclosure relates to fuel systems, more specifically to fuel injectors for turbomachines.

### 2. Description of Related Art

Traditional fuel injector systems involve many complex machined parts that can be expensive and difficult to manufacture in order to create a desired flow path for fuel and/or mixing air. Traditionally, such devices have limited turn-down range and performance capabilities.

Such conventional methods and systems have generally been considered satisfactory for their intended purpose. However, there is still a need in the art for improved fuel injector systems and components thereof. The present disclosure provides a solution for this need.

### SUMMARY

In accordance with at least one aspect of this disclosure, a fuel injector system can include an air mixer defining an outer air circuit, at least one intermediate air circuit, and an inner air circuit. The fuel injector system can also include a fuel manifold defining a fuel circuit, at least a portion of which is operatively disposed within the air mixer such that the fuel circuit and the intermediate air circuit are in fluid communication with each other for atomization of fuel. At least one of the air mixer or the fuel manifold can be additively manufactured.

In certain embodiments, the fuel manifold can define a plurality of multipoint injector branches extending from a base portion. The base portion of the fuel manifold can define a smooth annular passage defined by non-linear inner walls. The annular passage can fluidly connect each multipoint injector branch to a fuel manifold inlet.

The intermediate air circuit can include a plurality of circumferentially spaced-apart outlets such that there is one outlet for each multipoint injector branch. In certain embodiments, each outlet of the intermediate air circuit can define a plurality of receptacles configured to hold the multipoint injector branches therein. It is contemplated that the receptacles can extend any suitable portion of the length of the multipoint injector branches. The receptacles can be coaxial with the intermediate air circuit.

Each multipoint injector branch can include a metering device disposed on an outlet end thereof to meter fuel into the intermediate air circuit. It is contemplated that each metering device can be attached to the outlet end of each multipoint injector branch in any suitable manner (e.g., brazing, interference fitting, friction fitting). The intermediate air circuit can include a diverging section downstream of an outlet end of each multipoint injector branch.

The air mixer can include an outer wall, an intermediate wall, and an inner wall. The outer air circuit can be defined between the outer wall and the intermediate wall. The intermediate air circuit can be defined between the intermediate wall and the inner wall. The inner air circuit can be defined within the inner wall.

The outer wall and the intermediate wall can be separated by outer support members and the intermediate wall and inner wall can be separated from each receptacle with intermediate support members. The inner air circuit can include a swirler assembly having airfoils defined therein to swirl air therein in an inner swirl direction.

The outer support members and the intermediate support members can define an airfoil shape to swirl air in an outer swirl direction and an intermediate swirl direction, respectively. The inner swirl direction can be counter to at least one of the outer swirl direction or the intermediate swirl direction.

The system can further include a heat shielding support that holds the fuel manifold and the air mixer in place. The support can be brazed to at least one of the air mixer and the fuel manifold, or the support can be attached in any suitable manner.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1A is a cross-sectional perspective view of an embodiment of a fuel injector system in accordance with this disclosure, showing a fuel manifold disposed within an air mixer;
Fig. 1B is a rear perspective view of the fuel injector system of Fig. 1A;
Fig. 2A is a perspective view of the fuel manifold of Fig. 1A, shown without metering devices disposed thereon;
Fig. 2B is a perspective view of a flow volume of the fuel manifold of Fig. 2A;
Fig. 2C is a perspective view of an outlet end of a multipoint injector branch of the fuel manifold of Fig. 2A, showing the metering device in cross-section and disposed thereon;
Fig. 3 is a perspective cross-sectional view of another embodiment of an outlet end of multipoint injector branch in accordance with this disclosure;
Fig. 4A is a cross-sectional perspective view of a portion of an intermediate flow circuit of the air mixer illustrated in Fig. 1A, shown without the fuel manifold;
Fig. 4B is a perspective front view of a portion of the air mixer illustrated in Fig. 1A, shown without the fuel manifold; and
Fig. 4C is a cross-sectional rear view of the air mixer illustrated in Fig 1A, shown with the fuel manifold disposed therein and illustrating potential swirl directions for each air circuit.

### DETAILED DESCRIPTION

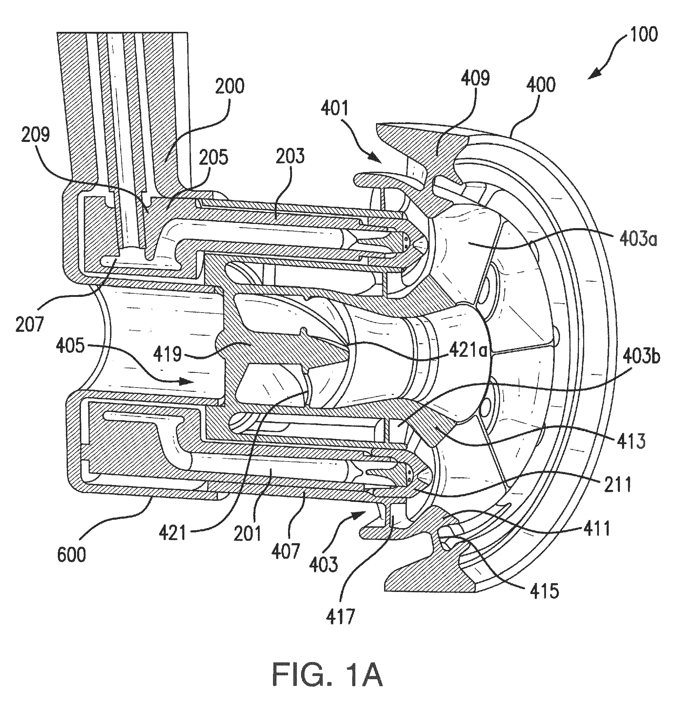

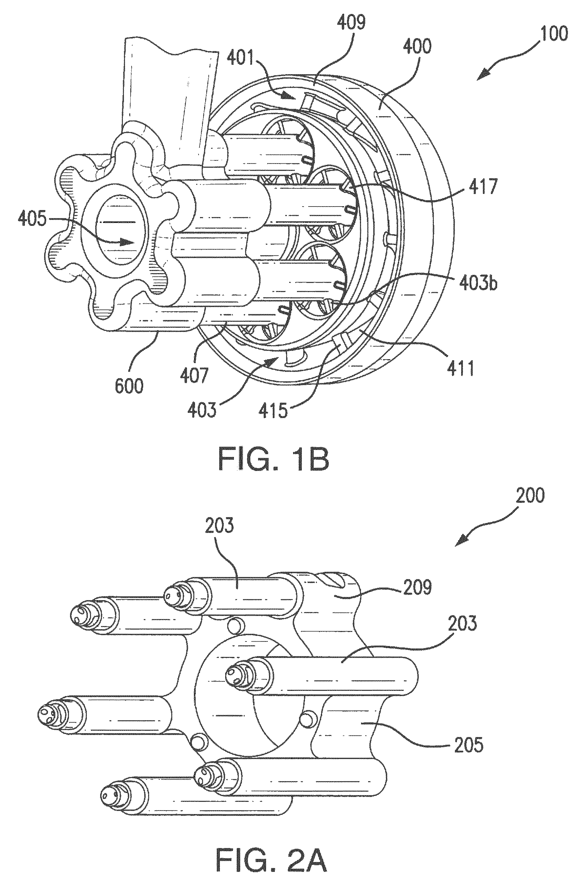

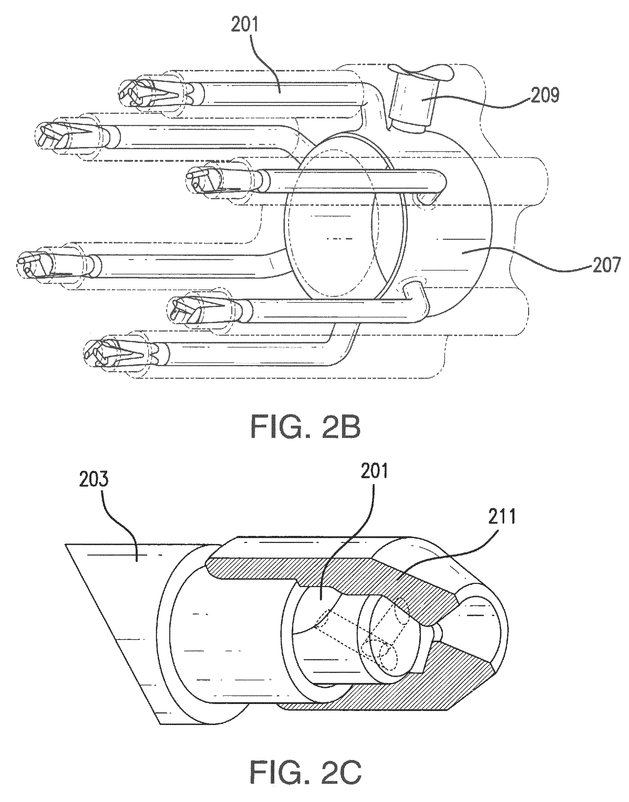

Reference will now be made to the drawings wherein like reference numerals identify similar structural features or aspects of the subject disclosure. For purposes of explanation and illustration, and not limitation, an illustrative view of an embodiment of a fuel injector system in accordance with the disclosure is shown in Figs. 1A and 1B, and is designated generally by reference character 100. Other embodiments and/or aspects of this disclosure are shown in Figs. 2A-4C. Certain embodiments described herein can be used to enhance performance characteristics of fuel injector systems.

Referring to Figs. 1A and 1B, a fuel injector system 100 can include an air mixer 400 defining an outer air circuit 401, one or more intermediate air circuits 403, and an inner air circuit 405. The fuel injector system 100 can also include a fuel manifold 200 defining a fuel circuit 201. At least a portion of the fuel manifold 200 can be operatively disposed within the air mixer 400 such that the fuel circuit 201 and the intermediate air circuit 403 are in fluid communication with each other for atomization of fuel.

At least one of the air mixer 400 or the fuel manifold 200 can be additively manufactured. However, it is contemplated that the air mixer 400 and/or the fuel manifold 200 can be manufactured in any other suitable manner (e.g., milling, lost wax casting).

Referring additionally to Fig. 2A, in certain embodiments, the fuel manifold 200 can define a plurality of multipoint injector branches 203 extending from a base portion 205. The base portion 205 of the fuel manifold 200 can define a smooth annular passage 207 defined by non-linear inner walls. As shown by the flow volume view of Fig. 2B, the annular passage 207 can fluidly connect each multipoint injector branch 203 to a fuel manifold inlet 209.

In certain embodiments, the air mixer 400 can define a plurality of receptacles 407 configured to hold the multipoint injector branches 203 therein. It is contemplated that the receptacles 407 can extend any suitable portion of the length of the multipoint injector branches 203. The receptacles 407 can be coaxial with the intermediate air circuit 403, however, any other suitable configuration is contemplated herein.

Each multipoint injector branch 203 can include a metering device 211 disposed on an outlet end of each multipoint injector branch 203. The metering device 211 can be configured to meter fuel into the intermediate air circuit 403 in any suitable manner. For example, the fuel circuit 201 and/or the metering device 211 can be configured to swirl and/or atomize fuel before releasing fuel into the intermediate air circuit 403. As shown, the multipoint injector branches 203 define the fuel circuit 201 to include one or more branches at an outlet end thereof to direct flow in any suitable manner to produce a desired flow swirl.

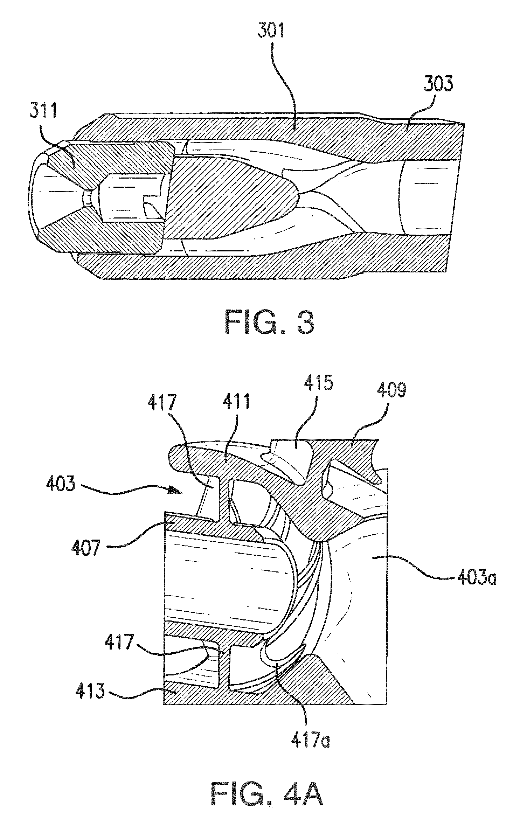

Referring to Fig. 3, another embodiment of an outlet end of a multipoint injector branch 303 is shown. The multipoint injector branch 303 defines fuel circuit 301 which opens up at the end thereof to retain metering device 311 at least partially within the multipoint injector branch 303. It is contemplated that each metering device 211, 311 can be attached to the outlet end of each multipoint injector branch 203, 303 in any suitable manner (e.g., brazing, interference fitting, friction fitting).

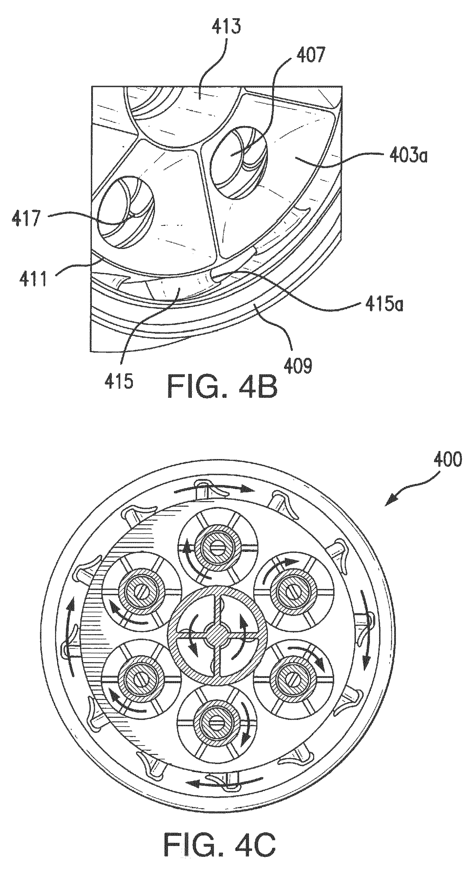

Referring to Figs. 1A, 1B, 4A, 4B, and 4C, the intermediate air circuit 403 can include a diverging section 403a downstream of an outlet end of each multipoint injector branch 203. As shown, the diverging section 403a can be downstream of a reducing section 403b where air in the intermediate air circuit 403 meets fuel effusing from the fuel circuit 201. As shown, the shape and/or contour of the diverging section can be smooth and/or non-linear. However, any suitable shape and/or contour for the diverging section 403a is contemplated herein.

In certain embodiments, the intermediate air circuit 403 can also include a plurality of circumferentially spaced-apart outlets defined between the diverging section 403a and the reducing section 403b such that there is one outlet for each multipoint injector branch 203.

As shown, the air mixer 400 can include an outer wall 409, an intermediate wall 411, and an inner wall 413. The outer air circuit 401 can be defined between the outer wall 409 and the intermediate wall 411. The intermediate air circuits 403 can be defined between the intermediate wall 411 and the inner wall 413. The inner air circuit 405 can be defined within the inner wall 413.

The outer wall 409 and the intermediate wall 411 can be separated by outer support members 415. In certain embodiments, the intermediate wall 411 and inner wall 413 can be separated from each receptacle 407 with intermediate support members 417. The outer support members 415 and the intermediate support members 417 can define a suitable airfoil shape to swirl air in an outer swirl direction and an intermediate swirl direction, respectively.

Additionally, the inner air circuit 405 can include a swirler assembly 419 having airfoils 421 defined therein to swirl air therein in an inner swirl direction. In certain embodiments, referring to Fig. 4C, the inner swirl direction can be counter to at least one of the outer swirl direction or the intermediate swirl direction. For example the inner, intermediate, and outer swirl directions can be arranged to co-swirl at the tangency points as illustrated in Figs. 4C, or to counter-swirl at the tangency points.

As shown, one or more of the outer support members 415, the intermediate support members 417, and the airfoils 421 can include a curved leading and/or trailing edge 415a, 417a, 421a which can allow for improved additive manufacturing as is appreciated by one having ordinary skill in the art (e.g., to allow printing from front to back, back to front, side to side, or any other suitable direction without the need for additional support material).

The system 100 can further include a heat shielding support 600 holding the fuel manifold 200 and the air mixer 400 in place. While the support 600 is shown as having a flower petal shape with an opening in the center, it is contemplated that the cap 600 can include any other suitable shape that allows air to pass through or around to enter each air circuit 401, 403, 405 as described above.

The support 600 can be brazed to at least one of the air mixer 400 and the fuel manifold 200, but it is contemplated that the support 600 can be attached in any suitable manner. The support 600 can be manufactured in any suitable (e.g., via additive manufacturing).

As described hereinabove, embodiments of this disclosure allow for simplified construction and assembly of fuel injector systems and components thereof. For example, the part count of certain embodiments described herein can be reduced (e.g., via additive manufacturing) while providing enhanced complex flow passages and surfaces.

For example, the air passages of the intermediate support members 417 can be contoured such that almost all surfaces of the intermediate air circuit, as well as the fuel multipoint injector branches 201 and all portions downstream thereof, are well wiped with air. One benefit of this contouring is that the likelihood of carbon formation on portions of the injector system 100 is reduced, leading to longer expected life of system 100 and/or components thereof. In addition, the convergence of the intermediate flow circuit 403 near where fuel effuses from the multipoint injector branches 201 causes the wiping thereof which can reduce the likelihood of carbon growth.

Some advantages associated with certain embodiments as described above include, e.g., three distinct air swirler zones, the intermediate being comprised of individual swirlers coaxial with outlets of the fuel manifold 200; efficiently air swept surfaces to reduce fuel wetting leading to carbon build up; unobstructed air inlet geometry, curved trailing and/or leading edges of support members to facilitate additive manufacturing; one fuel circuit 201 with a wide turndown range (no need for multiple circuits); one piece fuel manifold 200 combined with a single metering component per multipoint injector branch 203, possibly an integral spin slot/orifice component 311; and an integrated swirler assembly 419 in the inner air circuit 405. Other advantages are understood by those having ordinary skill in the art.

The methods and systems of the present disclosure, as described above and shown in the drawings, provide for fuel injector systems with superior properties including, e.g., improved performance. While the apparatus and methods of the subject disclosure have been shown and described with reference to embodiments, those skilled in the art will readily appreciate that changes and/or modifications may be made thereto without departing from the scope of the subject disclosure.

## Claims

1. A fuel injector system (100) comprising:
an air mixer (400) defining an outer air circuit (401), at least one intermediate air circuit (403), and an inner air circuit (405); and
a fuel manifold (200) defining a fuel circuit (201), at least a portion of which is operatively disposed within the air mixer (400) such that the fuel circuit (201) and the intermediate air circuit (403) are in fluid communication with each other for atomization of fuel.

2. The system of claim 1, wherein at least one of the air mixer (400) or the fuel manifold (200) is additively manufactured.

3. The system of any of claims 1 or 2, wherein the fuel manifold (200) defines a plurality of multipoint injector branches (203) extending from a base portion (205).

4. The system of claim 3, wherein the air mixer (400) defines a plurality of receptacles (407) configured to hold the multipoint injector branches (203) therein.

5. The system of claim 4, wherein the receptacles (407) are coaxial with the intermediate air circuit (403).

6. The system of claim 3, wherein each multipoint injector branch (203) includes a metering device (211) disposed on an outlet end thereof to meter fuel into the intermediate air circuit (403).

7. The system of claim 3, wherein the intermediate air circuit (403) includes a diverging section (403a) downstream of an outlet end of each multipoint injector branch (203).

8. The system of claim 4, wherein the air mixer (400) includes an outer wall (409), an intermediate wall (411), and an inner wall (413), wherein the outer air circuit (401) is defined between the outer wall (409) and the intermediate wall (411), wherein the intermediate air circuit (403) is defined between the intermediate wall (411) and the inner wall (413), and wherein the inner air circuit (405) is defined within the inner wall (413), and preferably wherein the outer wall (409) and the intermediate wall (411) are separated by outer support members (415), and wherein the intermediate wall (411) and inner wall (413) are separated from each receptacle (407) with intermediate support members (417), and preferably wherein the inner air circuit (405) includes a swirler assembly (419) having airfoils defined therein to swirl air therein in an inner swirl direction, and more preferably wherein the outer support members (415) and the intermediate support members (417) define an airfoil shape to swirl air in an outer swirl direction and an intermediate swirl direction, respectively.

9. The system of claim 3, wherein the base portion (205) of the fuel manifold (200) defines a smooth annular passage (207) defined by non-linear inner walls, wherein the annular passage (207) fluidly connects each multipoint injector branch (203) to a fuel manifold inlet (209).

10. The system of any preceding claim, further comprising a heat shielding support (600) holding the fuel manifold (200) and the air mixer (400), and preferably wherein the heat shielding support (600) is brazed or welded to at least one of the air mixer (400) and the fuel manifold (200).

11. An air mixer (400) for a fuel injector, defining an outer air circuit (401), at least one intermediate air circuit (403), and an inner air circuit (405).

12. The air mixer of claim 11, further defining a plurality of receptacles (407) configured to hold fuel multipoint injector branches (203) therein.

13. The air mixer of claim 12 wherein the receptacles (407) are coaxial with the intermediate air circuit (403), and preferably wherein the air mixer (400) includes an outer wall (409), an intermediate wall (411), and an inner wall (413), wherein the outer air circuit (401) is defined between the outer wall (409) and the intermediate wall (411), wherein the intermediate air circuit (403) is defined between the intermediate wall (411) and the inner wall (413), and wherein the inner air circuit (405) is defined within the inner wall (413), and preferably wherein the outer wall (409) and the intermediate wall (411) are separated by outer support members (415), and wherein the intermediate wall (411) and inner wall (413) are separated from each receptacle (407) with intermediate support members (417), and more preferably wherein the inner air circuit (405) includes a swirler assembly (419) having airfoils defined therein to swirl air therein in an inner swirl direction.

14. The air mixer of claim 13, wherein the outer support members (415) and the intermediate support members (417) define an airfoil shape to swirl air in an outer swirl direction and an intermediate swirl direction, respectively.

15. The air mixer of claim 11, wherein the intermediate air circuit (403) can include a plurality of circumferentially spaced-apart outlets such that there is one outlet for each multipoint injector branch (203).
